(19) Europäisches Patentamt
European Patent Office
Office européen des brevets

(11) **EP 1 642 927 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
*C08J 9/36* (2006.01)     *C04B 38/00* (2006.01)

(21) Anmeldenummer: **04023181.3**

(22) Anmeldetag: **29.09.2004**

(54) **Verfahren zur Herstellung von keramisierten oder metallisierten Schäumen**

Process for the production of ceramic or metallized foams

Procédé de préparation de mousses céramisées ou metallisées

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**05.04.2006 Patentblatt 2006/14**

(73) Patentinhaber: **SGL Carbon AG
65203 Wiesbaden (DE)**

(72) Erfinder:
• **Matheke, Torsten
86637 Wertingen (DE)**
• **Benitsch, Bodo
86647 Buttenwiesen (DE)**
• **Rossberg, Karin Dr.
86516 Augsburg (DE)**
• **Chodura, Alfred Dr.
86152 Augsburg (DE)**

(56) Entgegenhaltungen:
**EP-B- 0 907 621     US-A- 3 922 334
US-A- 5 429 780**

• **DATABASE WPI Section Ch, Week 197527 Derwent Publications Ltd., London, GB; Class A14, AN 1975-45011W XP002319899 & JP 49 109466 A (WAKO PURE CHEM IND LTD) 17. Oktober 1974 (1974-10-17)**
• **DATABASE WPI Section Ch, Week 198424 Derwent Publications Ltd., London, GB; Class A88, AN 1984-149659 XP002319900 & JP 59 078967 A (MTP CHEM CO LTD) 8. Mai 1984 (1984-05-08)**
• **DATABASE WPI Section Ch, Week 200341 Derwent Publications Ltd., London, GB; Class A88, AN 2003-433004 XP002319901 & JP 2002 333279 A (ICHIHARA SEISAKUSHO KK) 22. November 2002 (2002-11-22)**

**Beschreibung**

Die vorliegende Erfindung betrifft ein Verfahren zur Vergrößerung des Zellvolumens von offenzelligen Polyurethanschäumen und Anwendungen der so hergestellten Schäume.

Polyurethane (häufig als PU oder PUR abgekürzt, im folgenden wird die Abkürzung PUR benutzt) sind erhältlich durch Polyaddition von zwei- oder höherwertigen Alkoholen (z.B. Polyester- oder/und Polyetherdiolen) und Isocyanaten. Je nach Auswahl und stöchiometrischem Verhältnis der Edukte können Polyaddukte mit unterschiedlichen Eigenschaftsprofilen, z.B. hinsichtlich Dichte und Härte, hergestellt werden. Mit bisfunktionellen Alkoholen und Isocyanaten werden lineare, thermoplastische Produkte erhalten, mehrfunktionelle Edukte (z.B. dreiwertige Alkoholen) reagieren zu verzweigten bzw. vernetzten Polyaddukten. Polyurethane mit Polyestern bzw. Polyetherdiolen als Diolkomponente werden häufig als Polyester- bzw. Polyether-Polyurethan bezeichnet.

Zur Herstellung von Polyurethan-Schäumen wird die Polyaddition in Gegenwart von Wasser oder Carbonsäuren durchgeführt, denn diese reagieren mit den Isocyanaten unter Abspaltung von auftreibend wirkendem $CO_2$. Um die Schaumstruktur zu optimieren, werden ggf. leicht flüchtige Substanzen, z.B. Fluor-Chlor-Kohlenwasserstoffe (FCKW) oder Methylenchlorid als Treibmittel zugesetzt. Aus Gründen des Umwelt- und Gesundheitsschutzes ist jedoch in Deutschland die Verwendung von FCKW als Treibmittel nicht mehr zulässig.

Eine dieses Problem überwindende Weiterentwicklung der Schäumtechnologie besteht in der Verwendung flüssiger Kohlensäure als alternatives Treibmittel. Eine zweite, anlagentechnisch sehr aufwendige Alternative ist das Schäumen unter konstanten atmosphärischen Bedingungen in einem geschlossenen System. Bei Unterdruck können insbesondere Schäume mit niedriger Dichte ohne Treibmittelzusatz hergestellt werden.

Der besondere Vorteil von PUR-Schäumen als Werkstoffe besteht darin, dass die Zellstruktur Weichheit, Elastizität und Formstabilität bei gleichzeitigem geringem Gewicht gewährleistet. Polyurethan-Schäume finden aufgrund der großen Bandbreite ihrer Produkteigenschaften Anwendung in vielfältigen Gebieten. Haupteinsatzgebiete sind Polstermöbel, Kissen, Matratzen, Fahrzeugsitze, Autokarosserieteile, Gehäuse und Verpackungen, Isolierung und Schalldämmung sowie Filter. Typische Kennwerte von PUR-Schäumen auf Basis von Polyether bzw. Polyester sind in der folgenden Tabelle zusammengestellt:

|  | Polyether | Polyester |
|---|---|---|
| Rohdichte [kg/m³] | 20-110 | 20 - 60 |
| Stauchhärte [kPa] | 1,5 - 20 | 2 - 7 (50) |
| Zugfestigkeit [kPa] | 90 - 400 | 100 - 560 |
| Bruchdehnung [%] | 90 - 300 | 40 - 500 |
| Luftdurchlässigkeit [l/(m²*s)] | 1100 - 4500 | 750 - 8000 |
| **Poren pro Meter** | **394 - 2362** | **315 - 3543** |
| (Poren pro Inch [ppi]) | (10 - 60) | (8 - 90) |

Eine wichtige Größe zur Charakterisierung der Porenstruktur der Schäume ist die Anzahl der Poren pro Längeneinheit. Üblicherweise wird diese als Poren pro Inch (pores per inch, abgekürzt ppi) angegeben. Die Variationsbreite kommerziell erhältlicher PUR-Schäume reicht von feinporigen Schäumen mit mehr als **3937 Poren / m** (100 ppi) bis zu relativ grobporigen Schäumen mit ca. **315 bis 394 Poren / m** (8 bis 10 ppi).

Nach der vorstehend beschriebenen Verfahrensweise werden Schaumstrukturen mit geschlossenen Poren erhalten. Offenzellige Schaumstrukturen lassen sich durch ein nachträgliches Zerstören der Zellwände (sogenanntes Retikulieren) herstellen. Dabei werden durch Einwirkung der Schockwelle einer Explosion, beispielsweise einer Knallgasexplosion, die Zellwände aufgerissen, und ein charakteristisches Gerüst aus Stegen mit meist dreieckförmigem Stegquerschnitt bleibt zurück.

Offenzelliger Polyurethanschaum kann als Ausgangsmaterial für die Herstellung von offenzelligen Metall- bzw. Keramikschäumen verwendet werden. Die Herstellung von Schaumkeramiken umfasst in bekannter Weise die grundlegenden Schritte Bereitstellen einer Vorstruktur z.B. in der Geometrie eines späteren Bauteils aus einem offenzelligem Polymerschaum, Beschichten der Zellstege der Vorstruktur mit einer Suspension (Schlicker) aus keramischen oder/und bei Hochtemperaturbehandlung Keramik bildenden Partikeln ggf. unter Zusatz von Hilfsstoffen wie beispielsweise Sinteradditiven, Verdickungsmitteln und/oder Verflüssigern in Wasser oder einem anderen Lösungsmittel, Auspressen und Trocknen des beschichteten Polymerschaums, Härten der Beschichtung, Ausbrennen oder Pyrolyse des Polymermaterials und Sintern der zurückgebliebenen keramischen Beschichtung. Ein derartiges, industriell genutztes Verfahren ist aus der US 3 090 094 bekannt.

Auch das Dokument US-A 5,429,780 beschreibt ein Verfahren zur Herstellung eines im Wesentlichen aus Siliziumkarbid bestehenden Schaumes durch Imprägnieren eines Polyurethanschaumes mit einer Suspension von Siliziumpulver in einem organischen Harz, Härtung des Harzes und Carbonisierung von Harz und Polyurethanschaum sowie Bildung des Siliziumkarbids durch Umwandlung in einer inerten Atmosphäre bei Temperaturen bis 1600°C.

Das Ausbrennen des Polymermaterials führt zwangsläufig dazu, dass anstelle der Stege im als Ausgangsmaterial eingesetzten Polymerschaum Hohlräume zurückbleiben. Dadurch ist die Festigkeit der so erhaltenen Keramikschäume relativ gering. Eine Lösung dieses Problems besteht nach EP 0 907 621 darin, dass während oder nach der Sinterung die Schaumkeramik mit einer Schmelze oder Suspension getränkt und anschließend auf eine Temperatur oberhalb der Schmelztemperatur der in der Suspension enthaltenen Stoffe bzw. deren Reaktionsprodukte aufgeheizt wird. Dadurch werden die Hohlräume in den keramischen Stegen aufgefüllt sowie ggf. entstandene Risse und Poren verschlossen. Die Schmelzen bzw. die Feststoffe der Suspension bestehen aus Materialien, welche unterhalb der Schmelztemperatur der Schaumkeramik schmelzen, einen ähnlichen Ausdehnungskoeffizienten wie die Schaumkeramik aufweisen, diese sehr gut benetzen und nicht mit Bestandteilen der Schaumkeramik reagieren. Alternativ können mittels Gasphaseninfiltration geeigneter Materialien die Hohlräume gefüllt und Risse verschlossen werden. Offenzellige Schaumkeramik vor allem auf Basis von Siliciumcarbid eignet sich aufgrund ihrer Durchlässigkeit und Hochtemperaturbeständigkeit u.a. für die Herstellung von Brennerelementen in Flächenstrahlungs-, Volumen- und Porenbrennern.

Großtechnisch können PUR-Schäume mit annähernd homogener Porenverteilung nur bis zu einer Porengröße von ca. **315 bis 394 Poren / m** (8 bis 10 ppi) hergestellt werden. Bei einer weiteren Vergrößerung des Porenvolumens kollabieren die Strukturen unter dem Einfluß ihres Eigengewichtes. Für bestimmte Anwendungen wäre jedoch eine Struktur mit größeren Poren vorteilhaft. So könnten beispielsweise Filter offener gestaltet und damit der Durchsatz gesteigert werden.

In Porenbrennern mit einem Keramikschaum in der Flammenzone bewirkt eine Porenvergrößerung in gewissen Grenzen eine Absenkung der Temperatur des Keramikschaums sowie eine schnellere Homogenisierung der Temperaturverteilung bei instationären Prozessen, wie Anfahrbetrieb oder Lastwechseln. Durch diese Senkung der thermischen Last erhöht sich die Lebensdauer der Schaumstruktur bei gleicher Leistung, oder es kann eine höhere Leistungsdichte bei gleicher Standzeit wie mit konventionellen Keramikschäumen erreicht werden. Das entscheidende Kriterium für die Flammenbildung ist, dass die Peclet-Zahl einen kritischen Wert von 65 übersteigt. Die Peclet-Zahl wiederum ist, wie aus der folgenden Definition hervorgeht, dem Porendurchmesser direkt proportional:

$$Pe = (S_L * d_m * c_P * \rho_f)/\lambda_f \quad (1)$$

wobei $S_L$ [m/s] die laminare Verbrennungsgeschwindigkeit, $d_m$ [m] der äquivalente Porendurchmesser, $C_P$ [J/kg*K] die spezifische Wärmekapazität des Gasgemisches, $\rho_f$ [kg/m³] die Dichte des Gasgemisches und $\lambda_f$ [W/m*K] die Wärmeleitfähigkeit des Gasgemisches ist.

Aus dem Dokument JP49-109466A sind Stoßabsorber bekannt, die durch Imprägnierung eines flexiblen, offenzelligen Schaumes mit einer Harzlösung wie der eines Phenolharzes erhalten werden. Dabei können eine Reihe verschiedener Schäume und eine Reihe verschiedener Harze und Harzlösungen eingesetzt werden. Dem gesamten Dokument sind keine Angaben über die mittlere Porenzahl (ppi) oder deren Veränderung zu entnehmen.

Weiterhin beschreibt das Dokument US-A 3, 922,334 die Lagerung von offenzelligen PU-Schaum mit ≥ 394 Poren / m (10 ppi) in einem in Tetrahydrofuran (THF) gelösten Resolharz. Dabei wird jedoch ein Schrumpfen des PU-Schaumes beobachtet, das zu einer Erhöhung des ppi-Wertes führt, da sich die Porenzahl pro Längeneinheit durch das Schrumpfen erhöht.

Somit ist es wünschenswert, dass sowohl PUR-Schäume mit einer kleineren PPI-Zahl als auch entsprechende Keramikschäume zur Verfügung gestellt werden.

Der Erfindung liegt daher die Aufgabe zu Grunde, ein Verfahren bereit zustellen, welches es erlaubt, das Porenvolumen jeder einzelnen Pore und damit der gesamten Struktur zu vergrößern, ohne dabei die Stabilität der Schaumstruktur so weit zu verringern, dass sie kollabiert und in sich zusammen fällt.

Es ist bekannt, dass PUR unter Einwirkung bestimmter organischer Verbindungen, wie beispielsweise Aceton oder Essigsäureethylester, Quellungserscheinungen zeigt. Jedoch bewirkten diese Substanzen keine Aufweitung der Porenstruktur von PUR-Schäumen. Daher war es eine Aufgabe der Erfindung, wirksamere Substanzen zu finden, die eine Aufweitung der Porenstruktur von PUR-Schäumen hervorrufen.

Überraschenderweise wurde festgestellt, dass sich bei Kontakt mit bestimmten Chemikalien, von denen bisher keine quellende Wirkung auf PUR bekannt war, in PUR-Schäumen eine Vergrößerung des Volumens mit paralleler Verminderung der Anzahl der Poren pro Längeneinheit um bis zu ein Drittel erzielen lässt. Die mechanische Stabilität der Schaumstruktur wird dabei nicht merklich beeinträchtigt. Dieser Effekt kann durch thermische Einwirkung, d.h. Erwärmung, und mechanische Einwirkung, z.B. Einspannen der Schaumstruktur, verstärkt werden.

Als besonders wirkungsvoll zur Aufweitung der Schaumstruktur, d.h. Vergrößerung der Poren, erwiesen sich flüssige oder in gebräuchlichen Lösungsmitteln, vorzugsweise Wasser, leicht lösliche Verbindungen, die ein aromatisches Grundgerüst, z.B. einen Phenylring (Benzenring) und mindestens eine Hydroxygruppe enthalten, insbesondere dissoziationsfähige Hydroxygruppen.

Der am einfachsten aufgebaute Vertreter dieser Gruppe von Verbindungen ist Phenol (Hydroxybenzen). Dessen Anwendung für das erfindungsgemäße Verfahren ist zwar prinzipiell möglich, jedoch aufgrund der Giftigkeit dieser Substanz nicht erwünscht. Daher werden erfindungsgemäß bevorzugt weniger flüchtige und weniger schädliche Substanzen verwendet, welche das o.g. Strukturmerkmal aufweisen.

Diese Anforderungen werden beispielsweise durch Verbindungen aus der Gruppe der Phenolharze erfüllt. Phenolharze entstehen durch Kondensation von Phenolen und Aldehyden. Als Aldehydkomponente wird fast ausschließlich Formaldehyd eingesetzt, als Phenolkomponente neben Phenol selbst auch aryl- oder alkylsubstituierte Phenole (z B. Xylenole, Kresole) oder mehrwertige Phenole (z.B. Resorcin, Bisphenol A).

Die Struktur der Kondensationsprodukte ist abhängig vom Molverhältnis der Edukte und den eingesetzten Katalysatoren. Phenolüberschuss und saure Katalyse führt zur Entstehung von Verbindungen, in denen Hydroxygruppen tragende Phenylringe über Methylengruppen miteinander verbunden sind. Diese als Novolake bezeichneten Verbindungen sind löslich, schmelzbar und nicht selbsthärtend, können aber durch Zugabe eines weiteres Formaldehyd freisetzenden Härtungsmittels, z.B. Hexamethylentetramin, gehärtet werden.

Mit Formaldehydüberschuss und basischer Katalyse werden Produkte erhalten, in denen Hydroxygruppen tragende Phenylringe zumindest teilweise über Methyletherbrücken anstelle von Methylgruppen miteinander verbunden sind, und die Phenylringe teilweise zusätzlich mit Hydroxymethylgruppen substituiert sind. Aufgrund der Reaktivität der Methylethergruppen und der Hydroxymethylgruppen sind diese Verbindungen im Gegensatz zu Novolaken selbsthärtend und daher im flüssigen bzw. gelösten Zustand nur begrenzt haltbar.

Es ist bekannt, dass neben den Methylenbrücken auch die phenolischen Hydroxygruppen durch Ausbildung von Wasserstoffbrückenbindungen an der Strukturbildung der ausgehärteten Phenolharze beteiligt sind. Da auch Polyurethane Bausteine enthalten, welche durch ihre Polarität geeignete Partner für den Aufbau von Wasserstoffbrückenbindungen darstellen, wird angenommen, dass Wechselwirkungen über Wasserstoffbrückenbindungen zwischen den phenolischen Hydroygruppen und den funktionellen Gruppen der Polyurethane auch bei dem erfindungsgemäßen Prozess eine Rolle spielen. Die Erfindung ist jedoch nicht an diese Erklärung gebunden.

Darüber hinaus wird angenommen, dass der Raumbedarf der Phenylringe oder/und ihre räumliche Anordnung bei der Aufweitung der Schaumstruktur eine Rolle spielen.

Eine weitere für das erfindungsgemäße Verfahren geeignete Substanz ist Benzylalkohol (Phenylmethanol). Benzylalkohol ist im Gegensatz zu Phenol als mindergiftig eingestuft. Da Benzylalkohol bei Raumtemperatur im flüssigen Aggregatzustand vorliegt, kann es direkt in unverdünnter Form angewendet werden.

Für das erfindungsgemäße Verfahren können die eine Porenaufweitung bewirkenden Substanzen entweder unverdünnt in flüssiger Form oder beispielsweise als wässrige oder alkoholische Lösungen oder als Lösungen in Gemischen von Wasser und einem alkoholischen Lösungsmittel angewendet werden. Die Verwendung von Wasser als Lösungsmittel ist aus Kosten- und Entsorgungsgründen bevorzugt. Die Schaumstruktur-Körper aus PUR, die in bekannter Weise hergestellt und in offenzellige Schäume überführt worden sind, werden für mehrere Minuten bis Stunden in der Behandlungslösung ausgelagert.

Im Ergebnis dieser Behandlung, die durch erhöhte Temperatur, Anlegen von Unterdruck oder Anlegen einer Zugspannung an die Schaumstruktur unterstützt werden kann, vergrößern sich die Abmessungen (Länge, Breite und Höhe) der Schaumstruktur-Körper in Abhängigkeit von der Dauer der Behandlung und der Konzentration der verwendeten Lösung um 10 bis 50 % in jede Raumrichtung. Je geringer die Konzentration der Lösung, desto größer ist der Einfluss der Behandlungsdauer, während bei höheren Konzentrationen eine Verlängerung der Behandlungsdauer über ein gewisses Minimum hinaus keine signifikante Porenaufweitung mehr bewirkt. Offensichtlich liegt hier ein Sättigungsphänomen vor.

Die Poren bleiben im Ergebnis der erfindungsgemäßen Behandlung geöffnet, ein Kollabieren der Poren bzw. der Gesamtstruktur wurde nicht festgestellt. Die Anzahl der Poren in dem behandelten Schaumstruktur-Körper bleibt konstant. Da jedoch die Länge der Körper zunimmt, verteilt sich dieselbe Anzahl von Poren nunmehr auf einer größeren Länge, daraus folgt, dass die **Anzahl der Poren pro Längeneinheit Meter (Poren / m)** (Anzahl der Poren pro Längeneinheit Inch (ppi)) geringer ist als im Ausgangszustand. Bezogen auf die Gesamtgeometrie bedeutet das eine Vergrößerung des Volumens bei konstanter Porenzahl.

Werden als Ausgangsmaterial Schäume mit einer mittleren Porenzahl von beispielsweise **394 Poren / m** (10 ppi) eingesetzt, so lassen sich daraus mit dem erfindungsgemäßen Verfahren Schäume mit einer mittleren Porenzahl von ca. **256 Poren / m** (6,5 ppi) herstellen. Mit Schaumstrukturen mit einer mittleren Porenzahl von **315 Poren / m** (8 ppi) (Obergrenze nach dem heutigen Stand der Technik) als Ausgangsmaterial lassen sich mit dem erfindungsgemäßen Verfahren Porenzahlen von **197 bis 217 Poren / m** (5,5 bis 5 ppi) erzeugen, die bisher kommerziell nicht erhältlich waren.

Soll die Aufweitung der Poren durch Anlegen einer Zugspannung unterstützt werden, so lässt sich dies dadurch realisieren, dass die Schaumstruktur in einen Rahmen eingespannt wird, dessen Abmessungen den im Ergebnis der Behandlung zu erwartenden Dimensionen der Schaumstruktur, welche durch Vorversuche ermittelt wurden, entspricht.

Eine bedeutendes Anwendungsgebiet der nach dem erfindungsgemäßen Verfahren hergestellten PUR-Schäume ist die Herstellung von Metall- und Keramikschäumen. In diesem Zusammenhang ist es besonders vorteilhaft, wenn die Prozesse des Aufweitens der Poren und der Beschichtung der Schaumstruktur mit den keramischen bzw. Keramik bildenden Partikeln miteinander gekoppelt werden. Dazu werden die Partikel, mit denen die Schaumstruktur beschichtet werden soll, in der flüssigen porenaufweitenden Substanz oder der Lösung der porenaufweitenden Substanz dispergiert. Die weiteren Prozessschritte folgen den aus dem Stand der Technik, beispielsweise US 3 090 094 oder EP 0 907 621 bekannten Verfahren und umfassen im wesentlichen die grundlegenden Stufen Auspressen und Trocknen des beschichteten Polymerschaums, Härten der Beschichtung und Ausbrennen oder Pyrolyse des Polymermaterials und Sintern und ggf. Gas- oder Flüssigphaseninfiltrieren der zurückgebliebenen keramischen Beschichtung.

Nach dem erfindungsgemäßen Verfahren hergestellte PUR-Schäume mit einer mittleren Porenzahl kleiner als **315 Poren / m** (8 ppi) und daraus hergestellte Keramik- oder Metallschäume mit einer mittleren Porenzahl kleiner **315 Poren / m** (8 ppi) können beispielsweise als Filter verwendet werden.

Aus den nach dem erfindungsgemäßen Verfahren behandelten PUR-Schäumen hergestellte Keramikschaumstrukturen mit weniger als **315 Poren / m** (8 ppi) sind besonders geeignet als Flammenzonenstrukturen für die Brennkammern von Porenbrennern. Derartige Brenner sind z.B. aus den Patentschriften EP 0 657 011 und EP 1 212 258 bekannt. In der Brennkammer befindet sich ein poröses Material mit zusammenhängenden Hohlräumen, dessen Porengröße in Flussrichtung des Gas-/Luftgemisches vom Einlass zum Auslass hin kontinuierlich, d.h. innerhalb einer Übergangszone, oder diskontinuierlich, d.h. an einer Grenzfläche, zunimmt, so dass in der Übergangszone oder an der Grenzfläche die kritische Peclet-Zahl für die Flammentwicklung überschritten wird. Während in Flussrichtung gesehen vor der Grenzfläche bzw. bis in die Übergangszone hinein die Flammentwicklung unterdrückt ist, kann sich nach der Grenzfläche bzw. Übergangszone eine Flamme aufbauen.

Wird für den Bereich oberhalb der kritischen Peclet-Zahl, d.h. in der eigentlichen Brennzone, der Keramikschaum mit den erfindungsgemäß vergrößerten Poren eingesetzt, so wird dieser Bereich besser von den Brenngasen durchströmt und die bei der Verbrennung entstehende Wärme besser abgeführt. Der Schaum bleibt bei gleicher Brandleistung kühler, dadurch wird seine Lebensdauer verlängert.

Außerdem verkürzt sich beim Start des Brenners die Zeit bis zur Ausbildung einer gleichmäßig verteilten Flamme, welche sich bei Porenbrennern typischerweise beim Erreichen des stationären Verbrennungszustands in die Schaumstruktur zurück zieht.

Entscheidend für die Flammenbildung ist eine Peclet-Zahl von mehr als 65. Wegen der direkten Abhängigkeit der Peclet-Zahl von der Porengröße (Gleichung (1)) muss daher für die Flammenbildung auch die Porengröße einen kritischen Mindestwert überschreiten. Je weniger Poren über dieser Grenze liegen, um so weniger potentielle Bereiche (Poren) im Schaum gibt es, an denen eine erste Flammenbildung statt finden kann. Typischerweise gehen von diesen "Keimzonen" die weiteren Flammen aus und greifen auf den gesamten Schaum über. Mit einer zunehmenden Zahl an Poren über der kritischen Grenze gibt es demzufolge mehr Keimzonen für die Flammenbildung. Der Schaum erwärmt sich gleichmäßiger, homogener und damit schneller. Entsprechendes gilt für Lastwechsel, bei denen die Leistung des Brenners gesteigert oder gesenkt wird.

Durch das erfindungsgemäße Verfahren ist es nun möglich, Porenbrenner mit Keramikschäumen auszurüsten, die dank ihrer mittleren Porenzahl von weniger als 315 Poren m (8 ppi) diese Anforderungen an die Porenstruktur erfüllen.

Ausführungsbeispiele

Beispiel 1

Proben von PUR-Schaum mit einer mittleren Porenanzahl von **394 Poren / m** (10 ppi) wurden bei Raumtemperatur in wäßrigen Lösungen von Phenol ausgelagert. Die Abmessungen der Proben (Länge x Breite) betrugen 20 mm x 20 mm. Es wurden drei Parallelproben in einer Lösung mit einem massebezogenen Anteil von 0,5 % Phenol sowie drei weitere Proben in einer Lösung mit einem massebezogenen Anteil von 5 % Phenol ausgelagert. Die Proben waren dabei komplett in den jeweiligen Lösungen eingetaucht. Nach einer Auslagerungsdauer von 2 und 24 Stunden wurden jeweils Länge und Breite und die Porenanzahl der Proben ermittelt. Die Ergebnisse sind in Tabelle 1 dargestellt. Die prozentualen Längenänderungen sind stets auf die Länge im Ausgangszustand, d.h. vor der Auslagerung, bezogen.

Tabelle 1: Resultate der Auslagerungsversuche in wäßrigen Lösungen von Phenol

| Massebez. Phenolgehalt der Lösung | 0,5 % | | | | | | | | | 5 % | | | | | | | | |
|---|---|---|---|---|---|---|---|---|---|---|---|---|---|---|---|---|---|---|
| Versuchsdauer/Std. | 0 | | | 2 | | | 24 | | | 0 | | | 2 | | | 24 | | |
| Probe Nr. | 1 | 2 | 3 | 1 | 2 | 3 | 1 | 2 | 3 | 1 | 2 | 3 | 1 | 2 | 3 | 1 | 2 | 3 |
| Länge/mm | 20 | 20 | 20 | 23 | 23 | 22 | 23 | 24 | 24 | 20 | 20 | 20 | 33 | 32 | 33 | 31 | 29 | 29 |
| Längen-Änderung/% | - | - | - | 15 | 15 | 10 | 15 | 20 | 20 | - | - | - | 65 | 60 | 65 | 55 | 45 | 45 |
| Porenzahl/ m (PPI) | **394** (10) | **394** (10) | **394** (10) | **354** (9) | **354** (9) | **354** (9) | **354** (9) | **315** (8) | **315** (8) | **394** (10) | **394** (10) | **394** (10) | **236** (9) | **236** (6) | **236** (6) | **236** (6) | **276** (7) | **276** (7) |

Während bei der Mehrzahl der in der geringer konzentrierten Phenollösung ausgelagerten Proben bei Ausdehnung der Versuchsdauer von 2 auf 24 Stunden ein weiteres Längenwachstum beobachtet wurde, stagniert in der höher konzentrierten Lösung das Längenwachstum nach 2 Stunden, oder geht sogar in geringem Maße zurück. Andererseits wurde beobachtet, dass in der höher konzentrierten Lösung schon nach ca. 5 Minuten Auslagerungsdauer eine merkliche Quellung der Probe begann. Auch bei Vorversuchen mit einer wässrigen Lösung mit einem massebezogenen Phenolgehalt von 9 % wurde bereits wenige Minuten nach Auslagerungsbeginn eine erhebliche Aufweitung der Schaumstrukturen beobachtet.

Aus diesen Befunden kann geschlussfolgert werden, dass die Quellung mit zunehmender Phenolkonzentration verstärkt und beschleunigt wird, jedoch auch schneller eine Sättigung eintritt, in deren Folge die Längenänderung und Porenaufweitung stagniert.

Nach dem Auslagerungsversuch wurden die Proben weitere 24 Stunden lang bei Raumtemperatur aufbewahrt und erneut Länge und mittlere Porenzahl bestimmt. Dabei wurde ein signifikanter Rückgang der Längenänderung festgestellt, die Proben wiesen jetzt nur noch um 5 bis 35 % gegenüber ihrer ursprünglichen Ausdehnung vergrößerte Längen auf. Entsprechend hat sich auch die ppi-Zahl dem Ausgangswert wieder angenähert.

Um den Effekt der Porenaufweitung bestmöglich nutzen zu können, wäre es also nötig, die Schäume unmittelbar nach der Auslagerung noch im nassen Zustand weiterzuverarbeiten, d.h. sofort mit dem Schlicker für die Keramisierung beschichten. Es sei aber daran erinnert, dass die Benutzung von Phenol als Porenaufweitungsmittel wegen seiner Giftigkeit vermieden werden sollte.

Beispiel 2

An weiteren Proben von PUR-Schaum mit einer mittleren Porenanzahl von 10 ppi wurde die Quellungswirkung verschiedener Substanzen getestet. Vor und nach der Auslagerung wurde jeweils die Breite und Länge der Proben bestimmt.

Proben, die in Essigsäureethylester bzw. Aceton ausgelagert wurden, zeigten weder nach 2 noch nach 24 Stunden Anzeichen von Porenaufweitung, obwohl aus der Kunststoff-Fachliteratur bekannt ist, dass diese Substanzen eine Quellung von Polyurethan bewirken sollen.

Eine weitere Probe mit Abmessungen von 25 mm x 24 mm (Länge x Breite) wurde in einer 5%igen wässrigen Lösung von Resorcin (einem Phenol mit zwei Hydroxygruppen) behandelt. Nach zweistündiger Auslagerung bei Raumtemperatur betrugen die Probenabmessungen 28 mm x 28 mm, und nach 24 Stunden 29 mm $\times$ 29 mm, waren also um ca. 20 % vergrößert. Dies entspricht einer Verringerung der mittleren Porenanzahl auf ca. 315 Poren m (8 ppi).

Eine weitere Probe mit den Abmessungen 21 mm x 22 mm (Länge x Breite) wurde in unverdünntem Benzylalkohol ausgelagert. Nach 2 Stunden hatten sich die Abmessungen der Probe auf 29 mm x 30 mm vergrößert und nach 24 Stunden auf 30 mm x 31 mm, also um ca. 30%. Dies entspricht einer Verringerung der mittleren Porenanzahl auf ca. **299 Poren / m** (7,6).

Beispiel 3

Proben von PUR-Schaum mit einer mittleren Porenanzahl von **315 Poren / m** (8 ppi) wurden für 24 Stunden bei Raumtemperatur in verschieden konzentrierten Lösungen eines handelsüblichen Phenolharzes vom Resoltyp ausgelagert und anschließend zwei Stunden lang bei 40 °C im Trockenschrank getrocknet. Während des Auslagerungsvorgangs waren die Proben komplett von der Lösung bedeckt. Vor und nach dem Auslagern, nach dem Trocknen und nach weiteren zwei Tagen Auslagerung bei Raumtemperatur wurden Probenlänge und mittlere Porenzahl ermittelt. Die Ergebnisse sind in Tabelle 2 zusammengestellt. Die prozentualen Längenänderungen sind stets auf die Länge im Ausgangszustand, d.h. vor der Auslagerung, bezogen.

Es wurden Versuche mit drei verschiedenen Konzentrationen der Phenolharzlösung durchgeführt. Für jeden Versuch wurde eine andere Schaumprobe benutzt. Die Lösungen mit geringerem Harzgehalt wurden durch Verdünnung der 100%igen Harzlösung mit Ethanol erhalten.

Tabelle 2: Resultate der Auslagerungsversuche in Lösungen von Phenolharz

| Phenolharzgehalt der Lösung | 100 % | | | 50 %/50 % Ethanol | | | 33,3 %/66,7 %Ethanol | | |
|---|---|---|---|---|---|---|---|---|---|
| Versuchsdauer/Std. | 0 | 24 | Trocknung 2 Std, 40°C | 0 | 24 | Trocknung 2 Std, 40°C | 0 | 24 | Trocknung 2 Std, 40°C |
| Länge/mm | 65 | 80 | 80 | 75 | 90 | 90 | 70 | 85 | 85 |

(fortgesetzt)

| Längenänderung/% änderung/% | - | 23 | 23 | - | 20 | 20 | - | 21 | 21 |
|---|---|---|---|---|---|---|---|---|---|
| Porenzahl/ m (PPI) | 315 (8) | 256 (6,5) | 256 (6,5) | 315 (8) | 264 (6,7) | 264 (6,7) | 315 (8) | 260 (6,6) | 260 (6,6) |

Im Ergebnis der Auslagerung wurde bei allen verwendeten Konzentrationen an Phenolharz eine Längenänderungen zwischen 20 und 23 % beobachtet. Die Längenänderung hängt offenbar nicht signifikant von der Harzkonzentration ab. Wahrscheinlich lag in allen verwendeten Lösungen die Konzentration der den Effekt bewirkenden funktionellen Gruppen über einem kritischen Wert, oberhalb dessen eine weitere Erhöhung der Konzentration keine Vergrößerung des Effektes mehr bewirkt. Es wird angenommen, dass diese Beobachtung das bereits erwähnte Sättigungsphänomen widerspiegelt.

Durch die Trocknung kam es zu keinem messbaren Rückgang der Porenaufweitung, die auch nach zwei Tagen Lagerung der Probe bei Raumtemperatur erhalten blieb. Es ist daher nicht zwingend erforderlich, die Proben bereits in feuchtem Zustand weiter zu verarbeiten.

Die Beständigkeit der Porenaufweitung im Ergebnis der Behandlung mit Lösungen von Phenolharz anstelle von Phenol ist vermutlich auf die beim Trocknen beginnende Härtung des Harzes bzw. der Härtung vorausgehende Verfestigung des Harzes zurückzuführen. Durch die Aushärtung des auf der Schaumstruktur abgelagerten Harzes wird die aufgeweitete Struktur des Schaumes sozusagen eingefroren.

Die auf der Schaumstruktur zurückbleibenden Harzreste stören bei der Weiterverarbeitung zu metallisierten oder keramisierten Schäumen nicht, da das Polymergerüst sowieso durch Pyrolyse entfernt wird. Es konnte sogar festgestellt werden, dass sich die Benetzungseigenschften des mit Phenolharz beschichteten PUR-Schaums positiv beeinflussen ließen, so dass der im Folgeschritt aufgebrachte Schlicker aus keramikbildenden oder/und keramischen Partikeln in einer höheren Auftragsrate (Masse an aufgebrachten Partikeln pro Schaumoberfläche) aufgebracht werden konnte.

Aus den durch Auslagerung in Phenolharzlösung aufgeweiteten Schaumstrukturen ließen sich in bekannter Weise durch Beschichten der Stege mit einem siliciumcarbidhaltigen Schlicker, Trocknen, thermische Nachbehandlung und Nachverdichtung durch Flüssigphaseninfiltration Siliciumcarbidschäume erhalten, die u.a. für den Einsatz in Porenbrennern geeignet sind.

Beispiel 4

Um den Prozess der Herstellung von Keramikschäumen zu rationalisieren, bietet es sich an, die Prozesse der Porenaufweitung und der Beschichtung der Stege mit den keramischen bzw. keramikbildenden Partikeln zu kombinieren. Dazu wurde den in Beispiel 3 beschriebenen ethanolischen Lösungen von Phenolharz Silicumcarbidpulver zugesetzt, so dass ein Schlicker erhalten wurde. In diesem Schlicker wurden PUR-Schaumstrukturen mit einer Porenzahl von durchschnittlich **315 bzw. 394 Poren / m** (8 bzw. 10 ppi) ausgelagert.

Entscheidend für die Qualität der Beschichtung ist bei dieser Variante, dass die Auslagerungszeit lang genug ausgedehnt wird, so dass nach der Auslagerung die Porenaufweitung vollständig abgeschlossen ist. Werden die beschichteten Schaumstrukturen zu früh aus dem Schlicker entnommen, so setzt sich der Porenaufweitungsprozess noch fort, und aufgrund der damit verbundenen Volumenzunahme bilden sich Risse in der Beschichtung.

Aus den so erhaltenen mit Siliciumcarbid beschichteten Schäumen wurden wie in Beispiel 3 angegeben Siliciumcarbidschäume hergestellt.

Beispiel 5

Die Keramikschäume aus den Beispielen 3 und 4 wurden für ihre Eignung als Flammenzonenstruktur in Porenbrennern getestet. Der Brenner umfasste in Strömungsrichtung eine Vormischkammer, eine Lochplatte aus einem Fasermaterial, welches die Zone mit unterkritischer Peclet-Zahl bildete, und daran anschließend eine nach dem erfindungsgemäßen Verfahren hergestellte Schaumstruktur, welche die Flammenzone bildete. Der Brenner wurde mit Methan-Luft Gemischen gespeist.

Die Startphase des Brenners (Zeit für das Zurückziehen der Flamme in den Schaum) dauerte etwa 5 bis 10 Sekunden. Bei einer Startleistung von 10 kW wurde innerhalb von 12 bis 15 Sekunden in der Flammzone ein gleichmäßiges Glühen erreicht. Bei herkömmlichen Schäumen mit geringerer Porengröße wird dafür eine längere Zeit benötigt, die im Regelfall bei ca. 20 bis 30 Sekunden oder darüber liegt. Die Brenner wurden 240 Sekunden lang bei einer Maximalleistung von 30 kW betrieben. Dieser Test wurde mit verschiedenen Luftzahlen zwischen 1 und 1,3 durchgeführt. Anschließend wurde die Leistung auf 15 kW gedrosselt und die Luftzahl auf 1,4 erhöht, und in diesem Betriebszustand die Gaszufuhr abgestellt, jedoch die Luftzufuhr zur Kühlung aufrecht erhalten. Bei allen Versuchen behielten die Schäume ihre mechanische Festigkeit und zeigten keine sichtbaren Formveränderungen. Herkömmliche Schäume mit kleineren Poren zeigten bei Vergleichsversuchen eine wesentlich geringere Stabilität gegenüber der thermischen Belastung, was sich z. B. durch Risse, Ausplatzungen oder Oxidationseffekte bemerkbar machte. Außerdem konnte bei den erfindungsgemäßen Schäumen eine stärkere Wärmeabstrahlung beobachtet werden.

**Patentansprüche**

1. Verfahren zur Herstellung von keramisierten oder metallisierten Schäumen mit einer mittleren Porenzahl von weniger als **315 Poren / m** (8 Pores per Inch (ppi)), aus einem offenzelligem Polymerschaum, Beschichten der Zellstege der Vorstruktur mit einer Suspension aus keramischen oder/und bei Hochtemperaturbehandlung Keramik bildenden Partikeln gegebenenfalls unter Zusatz von Hilfsstoffen wie beispielsweise Sinteradditiven, Verdickungsmitteln und/ oder Verflüssigern in Wasser oder einem anderen Lösungsmittel, Auspressen und. Trocknen des beschichteten Polymerschaums, Härten der Beschichtung, Ausbrennen oder Pyrolyse des Polymermaterials und Sintern der zurückgebliebenen keramischen Beschichtung, **dadurch gekennzeichnet, dass**
ein offenzelliger Polyurethanschaum mit einer mittleren Porenanzahl von größer/gleich **315 Poren / m** (8 ppi) in einer flüssigen oder in einem Lösungsmittel gelösten Substanz, welche ein aromatisches Grundgerüst und mindestens eine Hydroxylgruppe enthält, ausgelagert wird und dabei eine Volumenzunahme von mindestens 10 % erfährt, wobei die Auslagerung in Benzylalkohol, wässrige oder alkoholische Lösungen von Phenolen, wässrige oder alkoholische Lösungen von Phenolharzen, Lösungen von Phenolen oder Phenolharzen in Gemischen aus Wasser und mindestens einem alkoholischem Lösungsmittel erfolgt.

2. Verfahren nach Anspruch 1, **dadurch gekennzeichnet, dass** eine wässrige Lösung eines Phenols mit einem massebezogenen Phenolgehalt von mehr als 0,1 % verwendet wird.

3. Verfahren nach Anspruch 2, **dadurch gekennzeichnet, dass** eine wässrige oder alkoholische Lösung eines Phenolharzes vom Resoltyp verwendet wird.

4. Verfahren nach einem der vorhergehenden Ansprüche, **dadurch gekennzeichnet, dass** während der Auslagerung an den Polyurethanschaum eine Zugspannung angelegt wird.

5. Verwendung von nach dem Verfahren nach Anspruch 1 bis 4 hergestellten Keramikschäumen mit einer mittleren Porenanzahl kleiner **315 Poren / m** (8 ppi) als Porenstruktur für die Flammzone von Brennern.

6. Verwendung von nach dem Verfahren nach Anspruch 1 bis 4 hergestellten Keramikschäumen mit einer mittleren Porenanzahl kleiner **315 Poren / m** (8 ppi) als Filter.

**Claims**

1. A process for producing ceramized or metallized foams having an average number of pores fewer than 315 pores/m (8 pores per inch (ppi)) from an open-cell polymer foam, coating the cell webs of the preliminary structure with a suspension of ceramic and/or in the case of high-temperature treatment ceramic-forming particles if applicable with the addition of auxiliary substances such as, for example, sintering additives, thickening agents and/or liquefiers in water or another solvent, pressing out and drying the coated polymer foam, hardening the coating, thorough baking or pyrolysis of the polymer material and sintering of the ceramic coating that is left behind,
**characterised in that** an open-cell polyurethane foam having an average number of pores that is greater than/ equal to 315 pores/m (8 ppi) is aged in a liquid substance, or a substance dissolved in a solvent, that contains an aromatic basic framework and at least one hydroxyl group, and thereby experiences an increase in volume of at least 10 %, with the ageing being effected in benzyl alcohol, aqueous or alcoholic solutions of phenols, aqueous or alcoholic solutions of phenolic resins, solutions of phenols or phenolic resins in mixtures of water and at least one alcoholic solvent.

2. A process according to claim 1, **characterised in that** an aqueous solution of a phenol with a mass-related phenol content of more than 0.1% is used.

3. A process according to claim 2, **characterised in that** an aqueous or alcoholic solution of a phenolic resin of the resol type is used.

4. A process according to one of the preceding claims, **characterised in that** during the ageing a tensile stress is applied to the polyurethane foam.

5. Use of ceramic foams produced according to the process according to claim 1 to 4 having an average number of pores that is smaller than 315 pores/m (8 ppi) as a pore structure for the flame zone of burners.

6. Use of ceramic foams produced according to the process according to claim 1 to 4 having an average number of pores that is smaller than 315 pores/m (8 ppi) as a filter.


**Revendications**

1. Procédé de fabrication de mousses céramisées ou métallisées ayant un nombre de pores moyen inférieur à 315 pores / m (8 pores par pouce (ppi)) dans une mousse de polymère à cellules ouvertes, des revêtements d'entretoises de cellules d'ébauches de structures à l'aide d'une suspension de particules de céramique et/ou de particules formant une céramique pour les traitements à température élevée, le cas échéant avec addition d'adjuvents tels que par exemple des additifs de frittage, des agents épaisisseurs et/ou des agents de fluidification dans l'eau ou dans un autre solvant, par expression et séchage de la mousse de polymère revêtue, le durcissement du revêtement, la cuisson ou la pyrolyse de la matière polymère et le frittage du revêtement céramique qui subsiste,
**caractérisé en ce que**
on précipite une mousse de polyuréthanne à cellules ouvertes avec un nombre moyen de pores supérieur/égal à 315 pores / m (8 ppi) dans une substance liquide ou dissoute dans un solvant, contenant une structure de base aromatique et au moins un groupe hydroxyle, et donnant ainsi une augmentation de volume d'au moins 10 %, la précipitation se faisant dans de l'alcool benzylique, des solutions aqueuses ou alcooliques de phénols, des solutions aqueuses ou alcooliques de résines phénoliques, des solutions de phénols ou de résines phénoliques mélangées à de l'eau et à au moins un solvant alcoolique.

2. Procédé selon la revendication 1,
**caractérisé en ce qu'**
on utilise une solution aqueuse d'un phénol ayant une teneur massique en phénol, supérieure à 0,1 %.

3. Procédé selon la revendication 2,
**caractérisé en ce qu'**
on utilise une solution aqueuse ou alcoolique d'une résine phénolique du type résol.

4. Procédé selon l'une des revendications précédentes,
**caractérisé en ce que**
pendant la précipitation on applique une traction sur la mousse de polyuréthanne.

5. Utilisation d'une mousse céramique fabriquée selon le procédé des revendications 1 à 4, ayant un nombre moyen de pores inférieur à 315 pores / m (8 ppi) comme structure de pores pour la zone de flamme de brûleurs.

6. Utilisation de mousse de céramique fabriquée selon le procédé des revendications 1 à 4, avec un nombre moyen de pores inférieur à 315 pores / m (8 ppi) comme filtre,

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3090094 A
- US 5429780 A
- EP 0907621 A
- JP 49109466 A
- US 3922334 A
- EP 0657011 A
- EP 1212258 A